Europäisches Patentamt

**European Patent Office**

**Office européen des brevets**

(19)

(11) Numéro de publication: **0 186 604**
**B1**

(12) **FASCICULE DE BREVET EUROPEEN**

(45) Date de publication du fascicule du brevet: **14.03.90**

(51) Int. Cl.⁵: **G 01 N 5/04**

(21) Numéro de dépôt: **85440069.4**

(22) Date de dépôt: **19.11.85**

(54) **Appareil pour la détermination rapide du taux d'humidité d'un matériau.**

(30) Priorité: **21.11.84 FR 8418076**

(43) Date de publication de la demande:
**02.07.86 Bulletin 86/27**

(45) Mention de la délivrance du brevet:
**14.03.90 Bulletin 90/11**

(84) Etats contractants désignés:
**AT BE DE FR GB IT LU NL SE**

(56) Documents cités:
**DE-A-3 231 004**
**US-A-3 909 598**
**US-A-4 168 623**

**PATENTS ABSTRACTS OF JAPAN, vol. 7, no.
290 (P-245) 1435r, 24th décembre 1983; & JP - A
- 58 162 839**

(73) Titulaire: **INSTITUT DE RECHERCHES DE LA
SIDERURGIE FRANCAISE (IRSID)
Voie Romaine B.P. 64
F-57210 Maizières-lès-Metz (FR)**

(72) Inventeur: **Heitz, Georges
27, rue Erckmann, Chatrian
F-57158 - Montigny-lès-Metz (FR)**
Inventeur: **Boury, Bernard
41, rue Daga Devant-lès-Ponts
F-57000 - Metz (FR)**
Inventeur: **Philippe, Jean
4, Square Robert Schuman Veckring
F-57920 - Kedange (FR)**

(74) Mandataire: **Ventavoli, Roger et al
INSTITUT DE RECHERCHES DE LA SIDERURGIE
FRANCAISE (IRSID) Station d'Essais Boîte
Postale 64
F-57210 Maizières-lès-Metz (FR)**

# EP 0 186 604 B1

**Description**

La présente invention se rapporte à un appareil pour le détermination du taux d'humidité d'un matériau, notamment le coke destiné à être enfourné dans un haut fourneau.

On connait actuellement différents appareils capables de déterminer l'humidité d'une matière, appareils que l'on peut classer schématiquement en deux groupes, selon que la mesure est effectuée en continu ou en discontinu.

Parmi les appareils appartenant au premier groupe, on peut citer, par exemple, les sondes neutroniques et les sondes à rétrodiffusion. Elles permettent l'obtention rapide de résultats, mais leur manque de précision aux faibles teneurs d'humidité et leur sensibilité au milieu environnant limitent considérablement leur emploi.

Dans le second groupe, on mentionnera principalement les appareils utilisant des méthodes de mesure gravimétrique, (US 4 168 623, US 3 909 598, JP 58-162 839) dans lesquels une opération de chauffage d'un échantillon est suivie d'une opération de pesage. Ces appareils donnent des résultats satisfaisants, mais le temps de séchage est long et d'autant plus prolongé que l'humidité initiale du matériau étudié est élevée. De plus, pour une plage d'humidité et un poids de matière donnés, il existe une puissance de séchage optimale, au-delà de laquelle la durée de séchage ne diminue plus.

Finalement, ces appareils ne sont pas appropriés pour effectuer des mesures rapides.

La demande de brevet allemand DE—A—3 231 004 présente un appareil pouvant donner, par anticipation, une estimation du poids de l'échantillon sec avant la fin du séchage, ce qui évite les inconvénients précités.

La présente invention concerne un appareil fonctionnant également par anticipation. Plus particulièrement, elle vise un appareil capable de déterminer, rapidement et avec précision, le taux d'humidité d'un matériau par gravimétrie à partir d'un échantillon.

A cet effet, l'invention a pour objet un appareil pour la détermination du taux d'humidité d'un matériau, comportant:

— une enceinte de chauffage d'un échantillon du matériau à étudier, de masse connue $M_0$,

— un dispositif de pesée de l'échantillon au cours du chauffage comprenant un moyen de support de l'échantillon,

— une unité de traitement, reliée au dispositif de pesée de manière à recevoir des signaux $M_j^i$ représentatifs d'un série i de mesures de la pesée de l'échantillon à des instants $t_j$ déterminés, cette unité comprenant un calculateur doté des moyens pour transformer les signaux $M_j^i$ en signaux $y_j^i$ représentatifs de la perte de poids de l'échantillon au cours du chauffage, et de moyens pour calculer, à l'aide des couples $[y_j^i, t_j]$, les n paramètres d'une fonction générale $f_n$ (t) asymptotique sur t et représentative de la perte de poids de l'échantillon au cours du temps, et pour calculer la valeur asymptotique $A^i$ que prend la fonction particulière $f_n^i$ (t) quant t tend vers l'infini, appareil caractérisé en ce que ladite unité (4) comprend:

— des moyens pour calculer des écarts $\delta^{i,i+1}$ entre deux valeurs asymptotiques successives $A^i$ et $A^{i+1}$ issues des séries de mesures i et i+1;

— des moyens pour comparer les écarts $\delta^{i,i+1}$ à une valeur de consigne $\Delta$ représentative de l'incertitude acceptable sur la détermination du taux d'humidité du matériau à étudier;

et en ce qu'il comprend des moyens pour restituer les valeurs asymptotiques lorsque les écarts parviennent à des valeurs égales ou inférieures à la valeur de consigne.

De préférence, l'appareil selon l'invention comprend également des moyens permettant d'arrêter automatiquement le chauffage de l'échantillon ainsi que les mesures de la pesée de l'échantillon dès que la différence $\delta^{i,i+1}$, entre deux valeurs asymptotiques successives $A^i$ et $A^{i+1}$, est inférieure ou égale à la valeur de consigne $\Delta$ que l'on s'est imposée.

Dans une forme de réalisation préférée, l'enceinte de chauffage est un four à micro-ondes.

Conformément à une réalisation avantageuse, l'unité de traitement est constituée par un ensemble à micro-processeur pourvu d'un convertisseur analogique/digital dont l'entrée est reliée au dispositif de pesée.

Comme on l'aura sans doute compris, l'appareil selon l'invention est capable de donner rapidement une valeur précise du taux d'humidité contenue dans un matériau en effectuant qu'un séchage partiel, voire seulement un début de séchage d'un échantillon du matériau étudié.

Les inventeurs ont su avantageusement mettre à profit leurs connaissances dans le domaine du séchage, en particulier l'évolution asymptotique du poids d'un matériau chauffé par micro-ondes, dans la conception d'un appareil capable de restituer la valeur de l'humidité contenue dans ce matériau à partir d'un nombre limité de mesures du poids prises au cours du séchage, voire seulement au début de l'opération de séchage.

L'appareil selon l'invention peut parfaitement être pourvu d'une unité de traitement adaptée pour procéder au traitement rapide des mesures de poids de l'échantillon au cours du séchage par une technique d'analyse numérique, par exemple celle faisant application de la méthode bien connue dite "des moindres carrés". Dans ce cas, le traitement consiste, tout d'abord, à introduire une première série i de l couples de valeurs "$y_j^i, t_j$" dans la relation:

2

$$E^i = \sum_{j=1,l} (y_j^i - y_{jc}^i)^2$$

où $y_{jc}^i$ représente le taux d'humidité théorique de l'échantillon étudié au temps $t_j$.

La recherche d'un extremum de cette fonction $E^i$ permet de déterminer les n paramètres de la fonction particulière $y^i = f_n^i$ (t), et donc d'établir une première équation de séchage, à partir de laquelle on calcule, simplement en faisant tendre la variable t (temps de séchage) vers l'infini, son asymptote $A^i$ qui représente une première valeur du taux d'humidité du matériau étudié. Ensuite, en introduisant une nouvelle série (i+1) de l couples de valeurs "pertes de poids-temps" prises par exemple à la suite des l précédentes, l'unité de calcul procède, à nouveau comme précédemment, à la détermination d'une nouvelle fonction particulière de séchage $y^{i+1} = f_n^{i+1}$ (t), puis de son asymptote $A^{i+1}$, l étant bien entendu un entier au moins égal au nombre n de paramètres de la fonction $f_n$ (t).

L'invention s'applique également au cas où les l couples de valeurs "pertes de poids-temps" de la série de mesures i+1 se recouvrent partiellement avec les l couples de la série i précédente.

De préférence même, le recouvrement entre deux séries successives de l couples de valeurs "pertes de poids-temps" est tel que, pour former la série suivante, on supprime à la série précédente un ou plusieurs couples de valeurs correspondant aux temps de séchage les plus courts et on y ajoute un nombre égal de couples de valeurs pris à des temps ultérieurs à la série des l couples précédents.

Finalement, dès que les valeurs des asymptotes se stabilisent, c'est-à-dire que les valeurs successives d'asymptote ne varient plus entre elles au-delà d'une certaine valeur d'écart $\Delta$ que l'on s'est imposée, l'unité de traitement restitue la ou les dernières valeurs d'asymptote satisfaisant au test qui, comme il a été précisé auparavant, représentent la teneur en humidité du matériau étudié.

L'un des avantages principaux de l'invention réside dans le gain de temps réalisé par rapport aux appareils de séchage classiques, ainsi que dans la précision de la détermination de l'humidité, cette précision étant, bien entendu, liée à la consigne d'écart $\Delta$ que l'on s'est donnée.

De plus, l'association des opérations de séchage et de pesage de l'échantillon, réalisée avec l'appareil selon l'invention, fait de ce dernier un appareil de mesure d'humidité en continu, qui minimise les manipulations des échantillons étudiés ainsi que les risques d'erreur, pouvant naître, par exemple, par pertes de matière.

L'appareil selon l'invention est donc particulièrement bien adapté pour effectuer des mesures en série.

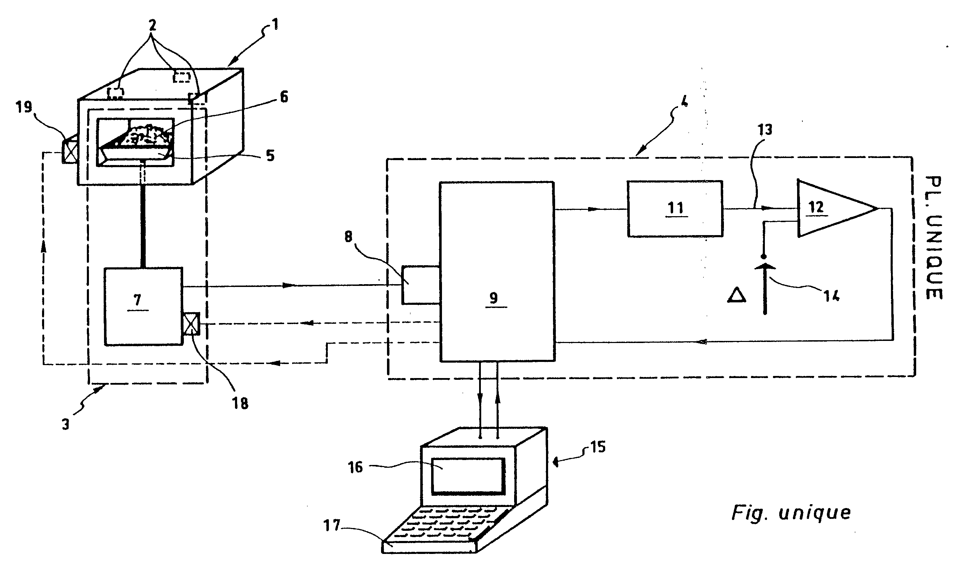

L'invention sera bien comprise et d'autres avantages et caractéristiques apparaîtront plus clairement au vu de la description qui va suivre, donnée en référence à la figure unique annexée qui représente schématiquement un appareil selon l'invention.

L'exemple illustré concerne la détermination, au moyen d'un chauffage par micro-ondes, du taux d'humidité contenue dans un échantillon de coke métallurgique, par exemple en sortie de cokerie ou avant son enfournement au haut fourneau.

Le chauffage de l'échantillon de coke est effectué dans l'enceinte d'un four à micro-ondes 1, relié à une alimentation électrique extérieure non représentée, cette enceinte étant équipée dans sa partie supérieure de sources émettrices de micro-ondes représentées en 2.

Chacune de ces sources comprend classiquement un générateur d'hyperfréquence associé à un guide d'onde, qui n'ont pas été représentés pour ne pas surcharger inutilement la figure.

De préférence, le four 1 est équipé dans sa partie supérieure de trois sources 2, disposées sur un cercle, à 120° l'une de l'autre. Cette disposition présente l'avantage de permettre une répartition homogène du rayonnement de micro-ondes dans tout le volume du four.

Conformément à l'invention, le four 1 est associé à un dispositif de pesée 3 qui est lui-même relié à une unité de traitement 4 en liaison interactive avec une console à écran de visualisation 15.

Le dispositif de pesée 3 comprend un plateau 5 placé dans le four 1, et destiné à supporter l'échantillon 6 de coke métallurgique pendant toute la durée de son exposition aux micro-ondes. Placée à l'extérieur du four 1, et directement reliée au plateau 5, une balance 7 complète le dispositif de pesée 3.

De préférence, le plateau 5 est choisi en un matériau inerte à l'égard des micro-ondes, par exemple en verre "pyrex"®. D'autres matériaux, tels que des alliages à base d'aluminium, peuvent également convenir. Par contre, les matériaux contenant du fer sont à éviter, car ils présentent la particularité de réfléchir les micro-ondes.

Le dispositif de pesée 3 est relié à l'unité de traitement 4, qui reçoit ainsi sur son entrée les signaux représentatifs des couples de valeurs "mesure de poids — temps de séchage", que l'on symbolisera dans la suite de cet exposé par $(M_j^i, t_j)$.

Dans l'exemple considéré, une horloge 8 permet d'échantillonner les mesures en imposant un intervalle de temps $\Delta t$ entre chaque couple de valeurs $(M_j^i, t_j)$ pris en compte en vue du traitement.

L'unité de traitement 4 est constituée de la manière suivante:
— les couples $(M_j^i, t_j)$ échantillonnés sont en premier lieu reçus par un calculateur rapide à mémoire 9 qui enregistre les données après les avoir numérisées dans un convertisseur analogique/digital incorporé. Ce calculateur a trois fonctions essentielles. La première est de convertir les couples $(M_j^i, t_j)$ en couples $(Y_j^i, t_j)$ où $Y_j^i$ représente la perte de poids relative de l'échantillon par évaporation de l'humidité sous l'effet des micro-ondes. Pour ce faire, le calculateur prend en compte la relation (I):

$$Y_j^i = 100 \frac{(Mo - M_j^i)}{Mo}$$

qui exprime $Y_j^i$ en pourcentages pondéraux et où Mo représente le poids initial de l'échantillon, avant son exposition aux micro-ondes.

Le calculateur 9 contient également l'équation générale (II), $Y = f_n (t)$ à n paramètres, représentative d'une famille de courbes asymptotiques sur l'axe des temps t. Ainsi, la seconde fonction essentielle du calculateur consiste, à partir de la série i des couples $Y_j^i$, $t_j$, de déterminer la fonction particulière de séchage $Y^i = f_n^i (t)$ en calculant les n paramètres par résolution d'un système linéaire de n équations à n inconnues. Cette fonction particulière $f_n^i (t)$ une fois déterminée, le troisième rôle essentiel du calculateur est de chercher la valeur asymptotique $A^i$ de $f_n^i (t)$ et ceci simplement en calculant la valeur que prend $Y^i$ quand on fait tendre t vers l'infini.

Ces opérations sont répétées pour d'autres séries de mesure i+1, i+2, etc.

Les valeurs des asymptotes sont comparées entre elles par établissement des différences successives du type $\delta^{i+1,i} = |A^{i+1} - A^i|$ effectuées grâce à des moyens de calcul schématisés en 11. Puis un testeur 12 reçoit sur son entrée 13 les différences $\delta^{i+1,i}$ qu'il compare avec une consigne d'écart $\Delta$ à ne pas dépasser qu'il reçoit sur une autre entrée 14.

Des moyens de restitution 15 des résultats, c'est-à-dire des valeurs $A^i$ validées par le test imposé dans le testeur 12, complètent l'appareil selon l'invention.

En effet, dès que les valeurs $A^i$ d'asymptote calculées sont stables, c'est-à-dire que au moins deux valeurs $A^i$ ne varient plus entre elles au-delà de la valeur de consigne $\Delta$, on procède alors, par l'intermédiaire de l'unité de traitement 4, à la restitution de ces valeurs $A^i$.

De préférence, deux tests positifs, c'est-à-dire trois valeurs d'asymptote successives pour lesquelles les différences $\delta^{i+1,i}$ sont inférieures à $\Delta$, entraînent la restitution des résultats.

De préférence également, on retiendra la dernière valeur $A^i$ comme étant le degré d'humidité du matériau étudié.

Ces moyens de restitution 15 sont constitués par un écran d'affichage 16, relié à l'unité 4, ainsi que par une console à clavier 17 permettant de dialoguer avec cette unité et, si nécessaire, de modifier les données, par exemple la consigne d'écart $\Delta$, la fonction générale $f_n (t)$, ou encore l'intervalle $\Delta t$ pilotant l'horloge 8.

Par ailleurs, l'appareil exemplifié sur la figure comprend des dispositifs 18 et 19, commandant respectivement l'arrêt du dispositif de pesée 3 et du four 1, qui sont automatiquement sollicités par l'unité de traitement 4 au moment de la validation des valeurs d'asymptote $A^i$.

On se sera certainement rendu compte que l'ensemble des fonctions recherchées pour l'unité de traitement 4 et qui viennent d'être décrites, peuvent, de nos jours, être avantageusement réalisées à l'aide d'un micro-processeur du commerce, par exemple par le micro-processeur commercialisé par la firme INTEL sous les références 8088 ou 8086.

Dans la suite de cet exposé, la description détaillée du fonctionnement de l'appareil exemplifié ci-dessus permettra de mieux apprécier les avantages de l'invention.

Comme précisé auparavant, l'exemple présenté concerne plus particulièrement l'analyse de l'humidité contenue dans le coke métallurgique au moyen des micro-ondes.

Les études menées dans ce domaine par les inventeurs ont permis de révéler qu'une fonction générale $f_n (t)$ de forme asymptotique (III):

$$\sum_{m=1,p} K_m [1 - \exp (t - \tau) L_m],$$

où $K_m$, $\tau$, $L_m$ sont des paramètres prenant des valeurs constantes spécifiques de chaque lot de coke étudié, répond parfaitement à l'évolution de la perte de poids d'un échantillon de coke en fonction du temps t d'exposition aux micro-ondes, l'indice p pouvant être égal à 1, 2 ou 3 selon le degré d'humidité estimé grossièrement.

Les essais ont permis de montrer que pour une humidité pondérale dite faible, c'est-à-dire inférieure à 2% environ, l'équation générale (III) était satisfaisante avec p = 1.

Dans le cas d'une humidité plus forte, c'est-à-dire jusqu'à environ 8%, on choisit de préférence p = 2, et pour les humidités supérieures à 8%, l'équation (III) avec p = 3 donne d'excellents résultats.

Selon le coke étudié, il sera donc loisible à l'opérateur de choisir l'équation générale de rang m la plus appropriée.

L'échantillon de coke étudié est donc introduit dans la chambre du four 1 à micro-ondes et déposé sur le plateau 5. Après la fermeture étanche du four 1, l'unité de traitement 4 commande en premier la mise en marche du dispositif de pesée qui procède ainsi à la mesure du poids initial Mo de l'échantillon. Ensuite seulement, le four 1 est mis en marche, soumettant ainsi l'échantillon aux micro-ondes. L'évolution de son poids $M_j^i$ est mesurée en continu par le dispositif de pesée 3 qui la transmet à l'unité 4 par l'intermédiaire de l'horloge réglable 8, qui assure un relevé séquentiel des mesures de pesée.

A ce propos, on notera que si les premières valeurs d'humidité, déterminées au cours de l'analyse d'un échantillon à l'aide de l'appareil selon l'invention, fluctuent entre elles de façon importante, cela signifie que les séries de I valeurs de couples "perte de poids — temps de séchage", soit "$y_j^i$, $t_j$", ne sont pas suffisamment représentatives de la courbe de séchage recherchée. Il suffit alors par exemple, d'augmenter — le $\Delta$ t que l'on s'est fixé entre chaque $M_j^i$ retenue pour l'évaluation de l'humidité, ou encore d'augmenter la valeur de consigne d'écart $\Delta$.

Une telle fluctuation entre les valeurs d'humidité déterminées peut être constatée, notamment avec les premières mesures qui correspondent en fait à la période transitoire de démarrage du séchage. Cette fluctuation disparaît ensuite rapidement avec les points de mesure ultérieurs.

Ensuite, l'unité 4 procède au traitement des couples de valeurs ($M_j^i$, $t_j$) dont le principe général a été décrit auparavant.

Un exemple concret et détaillé va exposer plus précisément le traitement qui est effectué avec les couples de valeurs ($Y_j^i$, $t_j$) dans l'unité de traitement.

Il s'agit de l'étude d'un échantillon de coke de masse initiale Mo égale à 3893,6 g que l'on place dans un four à micro-ondes capable de fournir une puissance utile maximale de 3 KW à une fréquence de 2450 MHz. Dans cet exemple, le four a été utilisé aux $\frac{3}{4}$ de sa puissance maximale.

L'intervalle $\Delta$ t que l'on impose à l'horloge 8 entre chaque mesure prise en compte dans le calculateur 9, est ici de 3 minutes.

Les valeurs des couples ($Y_j^i$, $t_j$) sont indiquées dans le tableau I présenté en fin de mémoire.

Le tableau II, présenté à la suite, donne les résultats obtenus par le traitement des valeurs de couples ($Y_j^i$, $t_j$).

Le coke étudié est bien connu pour avoir généralement une humidité pondérale supérieure à 2% mais inférieure à 8%.

En conséquence, comme précisé auparavant, la fonction (III) a été utilisée avec p = 2, ce qui donne: $f_n$ (t) = $K_1$ [1 — exp (t — $\tau$) $L_1$] + $K_2$ [1 — exp (t — $\tau$) $L_2$] où $K_1$, $K_2$, $L_1$, $L_2$ et $\tau$ sont les constantes à déterminer.

Pour la détermination de $A^i$, c'est-à-dire de l'asymptote de la courbe de séchage $Y^i$ = $f_n^i$ (t), on s'impose une valeur d'écart $\Delta$ de 0,1% que doivent satisfaire entre-elles trois valeurs successives d'asymptote.

La méthode classique des "moindres carrés" permet d'établir, pour chaque série i de mesures traitées, une équation de séchage $Y^i$ = $f_n^i$ (t), n étant égal à 5 dans cet exemple, et de déterminer la valeur $A^i$ de son asymptote.

Dans le présent exemple, la première équation de séchage et son asymptote ont été déterminées en utilisant les 10 premières mesures, c'est-à-dire après 27 minutes d'exposition aux micro-ondes.

Les traitements ultérieurs sont effectués en utilisant la série complète des mesures utilisées dans le traitement précédent et quelques mesures effectuées à des temps ultérieurs.

Ainsi, le second traitement prend en compte les 12 premières mesures; le troisième traitement prend en compte les 15 premières mesures; le quatrième traitement prend en compte les 20 premières mesures et le cinquième et dernier traitement prend en compte les 22 premières mesures après une durée totale d'une heure d'exposition aux micro-ondes.

Les trois dernières asymptote déterminées, qui ont respectivement comme valeur 6,19%, 6,10% et 6,16%, satisfont au test imposé, c'est-à-dire que la différence entre deux valeurs successives d'asymptote est, comme on peut le voir, inférieure à $\Delta$ qui a été dans ce cas fixée à 0,1%.

Dans cet exemple, on retient finalement 6,16% comme étant l'humidité pondérale du coke considéré. Cet échantillon a d'ailleurs été soumis à un séchage complet à l'aide des micro-ondes, avec les mêmes conditions opératoires que précédemment. Le séchage complet à été réalisé après 91 minutes d'exposition et révèle une humidité pondérale de 6,19%, soit une valeur très proche de celle déterminée par le calcul, qui est de 6,16%. Le gain de temps réalisé dans ce cas est de $\frac{1}{3}$.

D'autres essais, effectués également avec des échantillons de coke métallurgique, ont montré que:
— avec des cokes dits à "faible humidité", c'est-à-dire inférieure à 2%, en choisissant une valeur $\Delta$ de 0,1%, l'appareil selon l'invention donne dès le premier $\frac{1}{3}$ du temps nécessaire au séchage complet, des résultats aussi bons que ceux obtenus après séchage complet de l'échantillon. Ainsi, un échantillon de coke de 5 kg, qui est classiquement séché en 90 minutes au moyen des micro-ondes, a été analysé en 30 minutes par l'appareil selon l'invention;
— avec des cokes dits à "forte humidite", c'est-à-dire dont l'humidité est comprise entre 2% et 8% pondérale, avec une valeur $\Delta$ de 0,3%, les résultats attendus ont été obtenus au terme d'une période à peine inférieure à la moitié du temps de séchage complet. Ainsi, un échantillon de coke de 5 kg, dont le séchage classique à l'aide des micro-ondes nécessite 45 minutes, a été analysé en 20 minutes avec l'appareil selon l'invention.

Il va de soi que l'invention ne saurait se limiter à l'exemple décrit, mais s'étend à de multiples variantes ou équivalents dans la mesure où sont respectées les caractéristiques de l'invention énoncées dans les revendications jointes.

Ainsi, l'invention n'est pas limitée à une enceinte dans laquelle le séchage est produit par les micro-ondes. On peut également songer à une enceinte chauffée électriquement ou autrement, sous réserve que la perte de poids puisse être modélisée par une fonction asymptotique.

De même, la fonction générale $f_n$ (t) n'est pas limitée aux expressions citées dans l'exemple décrit ci-dessus et comprend également toutes les expressions analytiques représentatives d'une famille de courbes asymptotiques pouvant reproduire fidèlement l'évolution de la perte de poids d'un matériau en

5

fonction du temps de séchage.

Il doit être cependant évité que, lors du chauffage, des points chauds se forment sur l'échantillon. Sinon, il y a un risque de combustion locale et la perte de poids ne serait plus uniquement liée au départ de l'eau. Pour empêcher une éventuelle formation de points chauds, on pourra avantageusement prévoir un fonctionnement séquentiel des magnétrons ou un masquage momentané de ceux-ci par les pales d'un ventilateur, ou encore une mise en rotation du plateau support sur lui-même, ou toute autre disposition visant à parfaire l'homogénéité du chauffage.

De même, l'invention qui est applicable pour l'analyse de l'humidité d'un coke, est également applicable pour l'analyse de l'humidité contenue dans d'autres matériaux, et notamment des matières carbonées, par exemple, des mélanges crus d'agglomérés.

De même encore, la plateau 5 peut être remplacé par tout autre moyen de support, par exemple une bande transporteuse à pesons défilant dans une enceinte de chauffage 1 de type four "tunnel" pour un processus d'analyse en continu de l'humidité.

**TABLEAU I**

| $t_j$ (mn) | $M_j$ (kg) | $Y_j^i$ (%) |
|---|---|---|
| 0 | 0,38936 | 0 |
| 3 | 0,38772 | 0,42 |
| 6 | 0,38616 | 0,82 |
| 9 | 0,38433 | 1,29 |
| 12 | 0,38207 | 1,87 |
| 15 | 0,38028 | 2,33 |
| 18 | 0,37845 | 2,80 |
| 21 | 0,37666 | 3,26 |
| 24 | 0,37518 | 3,64 |
| 27 | 0,37413 | 3,91 |
| 30 | 0,37308 | 4,18 |
| 33 | 0,37211 | 4,43 |
| 36 | 0,37028 | 4,90 |
| 39 | 0,37028 | 4,90 |
| 42 | 0,36958 | 5,08 |
| 45 | 0,36911 | 5,2 |
| 48 | 0,36849 | 5,36 |
| 51 | 0,36802 | 5,48 |
| 54 | 0,36732 | 5,66 |
| 57 | 0,36689 | 5,77 |
| 60 | 0,36650 | 5,87 |

TABLEAU II

| $t_j$ (mn) | $K_1$ | $K_2$ | $L_1$ | $L_2$ | $\tau$ | $A^i$ (%) |
|---|---|---|---|---|---|---|
| 27 | 11,8044 | − 5,30043 | − 0,05086 | − 0,08783 | 3,49360 | 6,5 |
| 33 | 9,83714 | − 2,58834 | − 0,02267 | − 0,00718 | 4,47243 | 7,25 |
| 42 | 9,62450 | − 3,43567 | − 0,05130 | − 0,11867 | 2,80437 | 6,19 |
| 54 | 8,94566 | − 2,84182 | − 0,05130 | − 0,12922 | 3,09649 | 6,10 |
| 60 | 8,94706 | − 2,78384 | − 0,05015 | − 0,12660 | 3,08637 | 6,16 |

EP 0 186 604 B1

# EP 0 186 604 B1

**Revendications**

1. Appareil pour la détermination du taux d'humidité d'un matériau, comportant:
— une enceinte de chauffage (1) d'un échantillon (6) du matériau à étudier, de masse connue;
— un dispositif de pesée (3) de l'échantillon au cours du chauffage comprenant un moyen (5) de support de l'échantillon;
— une unité de traitement (4) reliée au dispositif de pesée (3) de manière à recevoir des signaux $M_j^i$ représentatifs d'une série i de mesures de la pesée de l'échantillon à des instants $t_j$ déterminés, cette unité (4) comprenant un calculateur (9) doté de moyens pour transformer les signaux $M_j^i$ en signaux $y_j^i$ représentatifs de la perte de poids de l'échantillon au cours du chauffage et de moyens pour calculer, à partir des couples $y_j^i$, $t_j$, les n paramètres d'une fonction générale $f_n$ (t) asymptotique sur t et représentative de la perte de poids de l'échantillon au cours du temps, et pour calculer la valeur asymptotique $A^i$ que prend la fonction particulière $f_n$ (t) quant t tend vers l'infini, appareil caractérisé en ce que ladite unité (4) comprend:
— des moyens (11) pour calculer des écarts $\delta^{i+1,i}$ entre deux valeurs asymptotiques $A^i$ et $A^{i+1}$ issues de deux séries successives i et i+1 des mesures;
— des moyens (12) pour comparer les écarts $\delta^{i+1,i}$ à une valeur de consigne $\Delta$ représentative de l'incertitude acceptable sur la détermination du taux d'humidité du matériau à étudier;
et en ce qu'il comprend des moyens (15) pour restituer les valeurs asymptotiques lorsque les écarts $\delta$ parviennent à des valeurs égales ou inférieures à la valeur de consigne $\Delta$.

2. Appareil selon la revendication 1, caractérisé en ce que le moyen de support (5) de l'échantillon (6) est un plateau.

3. Appareil selon la revendication 1, caractérisé en ce que le moyen de support de l'échantillon est une bande transporteuse et en ce que l'enceinte de chauffage est un four de type "tunnel".

4. Appareil selon la revendication 1, caractérisé en ce qu'il comprend également des moyens d'arrêt automatique (18) et (19) de la mesure et du chauffage dès que le test imposé aux valeurs d'asymptote $A^i$ par le comparateur (12) est validé.

5. Appareil selon la revendication 1 ou 2, caractérisé en ce que l'enceinte de chauffage (1) est constituée par un four à micro-ondes.

6. Appareil selon la revendication 1, caractérisé en ce que la fonction générale $f_n$ (t) à n paramètres à déterminer est de la forme analytique suivante:

$$\sum_{m=1,p} K_m \, [1 - \exp{(t - \tau)} \, L_m]$$

où $K_m$, $L_m$ et $\tau$ représentent les n paramètres à déterminer, ces paramètres étant des constantes spécifiques du matériau étudié.

7. Appareil selon la revendication 1, caractérisé en ce que l'unité de traitement (4) est réalisée par micro-processeur.

8. Application de l'appareil selon la revendication 1 à la détermination du taux d'humidité du coke destiné à être utilisé en sidérurgie, ou des mélanges crus d'aggloméré sidérurgique ou de leurs constituants.

**Patentansprüche**

1. Vorrichtung zum Ermitteln des Feuchtigkeitsgehaltes eines Materiales, mit:
— einer Kammer (1) zum Erhitzen einer Probe (6) des zu untersuchenden Materiales bekannter Masse;
— einer Wiegeeinrichtung (3) für die Probe während des Erhitzens, mit einer Trageinrichtung (5) für die Probe;
— einer Verarbeitungseinheit (4), die an die Wiegeeinrichtung derart angeschlossen ist, dass sie Signale $M_j^i$ erhält, die für eine Messreihe i für das Gewicht der Probe zu bestimmten Zeitpunkten $t_j$ repräsentativ sind, welche Einheit (4) einen Rechner (9) aufweist, der mit Einrichtungen zum Umwandeln der Signale $M_j^i$ in für den Gewichtsverlust der Probe im Laufe des Erhitzens repräsentative Signale $y_j^i$ und mit Einrichtungen zum Errechnen der n Parameter einer allgemeinen Funktion $f_n$ (t), ausgehend von Wertpaaren $y_j^i$, $t_j$ versehen ist, welche Funktion asymptotisch über t und für den Gewichtsverlust der Probe im Laufe der Zeit repräsentativ ist, und zum Errechnen des Asymptotenwertes $A^i$, der die besondere Funktion $f_n$ (t) annimmt, wenn t gegen Unendlich strebt, welche Vorrichtung dadurch gekennzeichnet ist, dass diese Einheit (4) folgendes aufweist:
— Einrichtungen (11) zum Errechnen des Unterschiedes $\delta^{i+1,i}$ zwischen zwei Asymptotenwerten $A^i$ und $A^{i+1}$, die bei zwei aufeinanderfolgenden Reihen i und i+1 der Messungen auftreten;
— Einrichtungen (12) für den Vergleich der Unterschiede $\delta^{i+1,i}$ mit einem Einstellwert $\Delta$, der für die noch akzeptable Unsicherheit beim Ermitteln des Feuchtigkeitsgehaltes des zu untersuchenden Materiales repräsentativ ist;
und dass sie Einrichtungen (15) für die Wiedergabe der Asymptotenwerte aufweist, sobald die Unterschiede $\delta$ Werte erreichen, die gleich oder kleiner sind als der Einstellwert $\Delta$.

2. Vorrichtung nach Anspruch 1, dadurch gekennzeichnet, dass die Trageinrichtung (5) für die Probe (6) eine Waagschale ist.

3. Vorrichtung nach Anspruch 1, dadurch gekennzeichnet, dass die Trageinrichtung für die Probe ein Transportband ist, und dass die Heizkammer ein Tunnelofen ist.

4. Vorrichtung nach Anspruch 1, dadurch gekennzeichnet, dass sie Einrichtungen (18, 19) zum automatischen Abstellen der Messung und des Erhitzens aufweist, sobald die Untersuchung der Asymptotenwerte $A^i$ durch den Komparator (12) gültig ist.

5. Vorrichtung nach Anspruch 1 oder 2, dadurch gekennzeichnet, dass die Heizkammer (1) von einem Mikrowellenofen gebildet ist.

6. Vorrichtung nach Anspruch 1, dadurch gekennzeichnet, dass die allgemeine Funktion $f_n$ (t) mit n zu bestimmenden Parametern die folgende analytische Form besitzt

$$\sum_{m=1,p} K_m [1 - \exp (t - \tau) L_m]$$

in der $K_m$, $L_m$ und die zu bestimmenden n Parameter darstellen, welche Parameter spezifische Konstanten des untersuchten Materiales sind.

7. Vorrichtung nach Anspruch 1, dadurch gekennzeichnet, dass die Verarbeitungseinheit (4) von einem Mikroprozessor gebildet ist.

8. Verwendung der Vorrichtung nach Anspruch 1 zum Ermitteln des Feuchtigkeitsgehaltes von für die Verwendung in der Hüttenindustrie bestimmten Koks oder von Rohmassen für Hüttenbriketts oder ihrer Bestandteile.

## Claims

1. Apparatus for determining the moisture content of a material, comprising:
— a cupboard (1) for heating a sample (6) of the study material of known mass;
— a device (3) for weighing the sample during the heating, having a means (5) for supporting the sample;
— a processing unit (4) connected to the weighing device (3) so as to receive signals $M_j^i$ representing a series i of measurements of the weight of the sample at particular moments $t_j$, this unit (4) having a computer (9) equipped with means for converting the signals $M_j^i$ into signals $y_j^i$ representing the loss of weight of the sample during the heating and with means for calculating, from the pairs $y_j^i$, $t_j$, the n parameters of a general function $f_n$ (t), asymptotic relative to t and representing the loss of weight of the sample in time, and for calculating the asymptotic value $A^i$ which the special function $f_n$ (t) assumes when t tends towards infinity, the said apparatus being characterized in that the said unit (4) comprises:
— means (11) for calculating variations $\delta^{i+1,i}$ between two asymptotic values $A^i$ and $A^{i+1}$ obtained from two successive series i and i+1 of measurements;
— means (12) for comparing the variations $\delta^{i+1,i}$ with a nominal value $\Delta$ representing the acceptable uncertainty in the determination of the moisture content of the study material;
and in that it comprises means (15) for restoring the asymptotic values when the variations $\delta$ reach values equal to or below the nominal value $\Delta$.

2. Apparatus according to Claim 1, characterized in that the means (5) for supporting the sample (6) is a tray.

3. Apparatus according to Claim 1, characterized in that the means for supporting the sample is a conveyor belt, and in that the heating cupboard is a kiln of the "tunnel" type.

4. Apparatus according to Claim 1, characterized in that it also comprises means (18) and (19) for stopping the measurement and the heating automatically as seen as the test conducted on the asymptotic values $A^i$ by the comparator (12) is validated.

5. Apparatus according to Claim 1 or 2, characterized in that the heating cupboard (1) consists of a microwave oven.

6. Apparatus according to Claim 1, characterized in that the general function $f_n$ (t) with n parameters to be determined is of the following analytical form:

$$\sum_{m=1,p} K_m [1 - \exp (t - \tau) L_m]$$

where $K_m$, $L_m$ and $\tau$ represent the n parameters to be determined, these parameters being specific constants of the material studied.

7. Apparatus according to Claim 1, characterized in that the processing unit (4) takes the form of a micro-processor.

8. Application of the apparatus according to Claim 1 for determining the moisture content of coke intended to be used in metallurgy or of crude mixtures of metallurgical conglomerate or of their constituents.

9

Fig. unique